# EUROPÄISCHE PATENTSCHRIFT

(11) **EP 3 170 673 B1**
(45) Veröffentlichungstag und Bekanntmachung des Hinweises auf die Patenterteilung: **03.07.2019**
(21) Anmeldenummer: 16198615.3
(22) Anmeldetag: 14.11.2016
(51) Int. Cl.: B41M 5/00, B41J 2/48, B41J 3/407, B41J 11/00, B41J 2/455, G02B 6/00

(54) **DIGITALDRUCKVERFAHREN FÜR KERAMIKFARBEN**
DIGITAL PRINTING METHOD FOR CERAMIC INKS
PROCÉDÉ D'IMPRESSION NUMÉRIQUE POUR ENCRES CÉRAMIQUES

(30) Priorität: 13.11.2015 DE 102015119618
(43) Veröffentlichungstag der Anmeldung: 24.05.2017
(73) Patentinhaber: Hochschule Offenburg, 77652 Offenburg (DE)
(72) Erfinder: Waibel, Günther, 79312 Emmendingen (DE); Altan, Lokman, 77933 Lahr (DE)
(74) Vertreter: Eder Schieschke & Partner mbB

(56) Entgegenhaltungen:
- EP-A2- 1 371 496
- EP-A2- 2 436 527
- WO-A2-2015/023612

## Beschreibung

Die vorliegende Erfindung betrifft ein Verfahren zum digitalen Drucken einer Keramikfarbe auf einem Glassubstrat, wobei die Keramik der Keramikfarbe auf mindestens den Schmelzpunkt der Keramik mittels eines Laserstrahls simultan zu dem Aufbringen der Keramikfarbe auf ein Glassubstrat mittels eines Druckkopfes erwärmt wird, wobei der Laserstrahl zum Erwärmen der Keramik der Keramikfarbe von der Seite des Glassubstrats eingestrahlt wird, die der Seite gegenüber liegt, auf der die Keramikfarbe aufgebracht wird. Weiterhin betrifft die vorliegende Erfindung auch die Verwendung eines Laserstrahls in einer Vorrichtung zum digitalen Drucken einer Keramikfarbe auf einem Glassubstrat, wobei der Laserstrahl die Keramik der Keramikfarbe auf mindestens den Schmelzpunkt der Keramik simultan zu dem Aufbringen der Keramikfarbe auf ein Glassubstrat mittels eines Druckkopfes der Vorrichtung erwärmt, wobei der Laserstrahl zum Erwärmen der Keramik der Keramikfarbe von der Seite des Glassubstrats eingestrahlt wird, die der Seite gegenüber liegt, auf der die Keramikfarbe aufgebracht wird. Die vorliegende Erfindung betrifft weiterhin auch eine Vorrichtung zum digitalen Drucken einer Keramikfarbe auf einem Glassubstrat, die einen Druckkopf zum Aufbringen einer Keramikfarbe auf ein Glassubstrat sowie einen Laser zum Erwärmen der Keramik der Keramikfarbe auf mindestens den Schmelzpunkt der Keramik mittels eines Laserstrahls umfasst, wobei Druckkopf und Laser derart angeordnet sind, dass der Laserstrahl von der Seite des Glassubstrats einstrahlbar ist, die der Seite gegenüber liegt, auf der die Keramikfarbe aufbringbar ist.

Bei heutigen Druckverfahren sind prinzipiell zwei Hauptmerkmale zu unterscheiden, zum einen die Bedruckungstechnik, zum anderen das Druckmedium (Farbe). Als Bedruckungstechnik hat sich Digitaldruck auf Glas mittlerweile neben Walzendruck und Spritzen als Industriestandard etabliert. Im Gegensatz zur Siebdrucktechnik ist die Digitaldrucktechnik sehr viel flexibler und als "*rapid-prototyping-Verfahren*" wesentlich schneller verfügbar. Während beim Siebdruck ein aufwändiger Prozess von der Siebherstellung über den eigentlichen Druck bis zur anschließenden Aushärtung der Farben durchlaufen werden muss, liegt beim Digitaldruck das Druckergebnis meist am gleichen Tag vor, da je nach Druckkopftechnologie die Farbe direkt auf das Substrat aufgetragen wird und diese nach kurzer Zeit selbstständig aushärtet (z.B. durch UV-Härtung oder IR-Strahlung). Die Siebdrucktechnik hat ihre Vorteile bei größeren Auflagen identischer Motive (Serienproduktion), während die Digitaldrucktechnik ihre Stärke bei kleineren Auflagen bis hin zu Einzelanfertigungen hat. Bislang galt der Siebdruck in Bezug auf Druckqualität dem Digitaldruck als überlegen. Allerdings ist am Markt zunehmend schnellere Verfügbarkeit und höhere Flexibilität gefragt, zudem reicht die Qualität durch neue UV-Digitaldruckmaschinen nahezu an das Ergebnis des Siebdrucks heran. Entsprechende Digitaldruckmaschinen sind beispielsweise bei der Fa. Thieme (www.thieme-products.de) oder Fa. Durst (www.durst-online.com) erhältlich.

Das zweite Hauptunterscheidungsmerkmal ist das Druckmedium, die Farbe. Während im Siebdruckbereich bislang hauptsächlich mit UV-härtenden Tinten auf organischer Basis gearbeitet wurde, kommen in letzter Zeit zunehmend keramische Farben zum Einsatz. Der größte Vorteil von Keramikfarben ist die hohe mechanische Festigkeit, die insbesondere im Industriebereich in Verbindung mit Glas zunehmend gefordert wird. Hintergrund ist die erforderliche Langzeitstabilität bei Produkten, die eine Bedienoberfläche aus Glas aufweisen und in rauer Umgebung mit wechselnden Temperaturen eingesetzt werden (z.B. Displays, Smartphones, Bedienelemente...). Keramikfarben können seit längerem im Siebdruck verarbeitet werden und sind mittlerweile auch im Digitaldruck am Markt verfügbar. Alle Druckfarben haben diesbezüglich jedoch eines gemeinsam: Zur Aushärtung der Keramikfarbe ist immer ein anschließendes Einbrennen der Farbe auf dem Substrat erforderlich.

Das große Problem bei derzeit verwendeten Keramikfarben ist die hohe Schmelztemperatur, die zur Aushärtung erforderlich ist (ca. 600°C bis 1400°C, je nach Farbmischung/-zusammensetzung). Bislang ist kein Verfahren bekannt, das Keramikfarben bereits am Druckkopf synchron zur Farbaufbringung aushärten kann. Die anschließende Farbaushärtung erfolgt sowohl beim Siebdruck als auch beim Digitaldruck in der Regel in einem sogenannten Vorspannofen bei Temperaturen über 600°C. Weiterhin bringt eine anschließende Farbaushärtung in einem Ofen auch den Nachteil mit sich, dass das Substrat, auf das aufgedruckt wird, bei den für die Farbaushärtung erforderlichen Temperaturen stabil sein muss.

Die EP 2 436 527 A2 betrifft eine Vorrichtung und ein Verfahren, bei denen ein Kopf verwendet wird, der gleichzeitig das Drucken, Trocknen und Verglasen der auf einer Glasplatte abgeschiedenen Tinte durchführt. Die Vorrichtung und das Verfahren verwenden marktübliche Geräte. Alternativ kann die Trocknung mittels einer Laservorrichtung oder einer UV-Lampe durchgeführt werden. Die Tinte kann keramischen oder organischen Typs sein. Durch eine Erhöhung der Leistung der Trocknungsvorrichtung ist es möglich, eine Verglasung oder Halbverglasung der Tinte unter hohen Einsparung von Raum, Energie, Bearbeitungszeit und Hilfsmittel zu erhalten.

Die EP 1 371 496 A2 betrifft einen Gegenstand, der zumindest teilweise aus Glas oder Glaskeramik mit einem in nicht digitaler Drucktechnik aufgebrachten Aufdruck besteht, dadurch gekennzeichnet, dass das Glas oder die Glaskeramik wenigstens einen Oberflächenbereich aufweist, der mit einem in digitaler Drucktechnik erzeugten Druckbild versehen ist. Die EP 1 371 496 A2 betrifft auch ein Verfahren zum Dekorieren eines Gegenstandes aus Glas oder Glaskeramik, wobei auf einen Oberflächenbereich des Glases oder der Glaskeramik ein Druckbild in nicht digitaler Drucktechnik aufgebracht wird, dadurch gekennzeichnet, dass auf einen weiteren Oberflächenbereich des Glases oder der Glaskeramik in digitaler Drucktechnik ein digital erzeugtes Druckbild aufgebracht wird.

Die WO 2015/023612 A2 betrifft eine keramische Tinte zur Herstellung eines Stützmittels, die wenigstens ein keramisches Material und wenigstens ein Bindemittel umfasst, und ein Tintensystem für ein Stützmittel mit wenigstens zwei unterschiedlichen keramischen Tinten sowie die Verwendung einer keramischen Tinte in einem Verfahren zur Herstellung eines Stützmittels.

Es war deshalb die Aufgabe der vorliegenden Erfindung, ein Verfahren, beziehungsweise eine Vorrichtung zum Digitaldruck von Keramikfarben bereitzustellen, mit dem die bisher relativ lange Prozesszeit und die geringe Flexibilität verbessert werden kann, beziehungsweise auch Keramikfarben verwendet werden können, deren Schmelzpunkte oberhalb der Schmelzpunkte des Glassubstrats, auf das sie aufgebracht werden, liegen.

Zur Lösung der genannten Aufgabe stellt die vorliegende Erfindung ein Verfahren zum digitalen Drucken einer Keramikfarbe auf einem Glassubstrat bereit, das die folgenden Schritte umfasst:
(a) Aufbringen einer Keramikfarbe auf ein Glassubstrat mittels eines Druckkopfes eines Digitaldruckgerätes; und
(b) Erwärmen der Keramikfarbe auf mindestens den Schmelzpunkt der Keramik mittels eines Laserstrahls,
wobei der Schritt (b) simultan zu dem Schritt (a) stattfindet,
dadurch gekennzeichnet, dass
der Laserstrahl zum Erwärmen der Keramik der Keramikfarbe von der Seite des Glassubstrats eingestrahlt wird, die der Seite gegenüber liegt, auf der die Keramikfarbe aufgebracht wird.

Alternativ betrifft die vorliegende Erfindung auch ein Verfahren zur Herstellung eines bedruckten Glassubstrats, bei dem die zuvor genannten Schritte (a) und (b) durchgeführt werden und ebenso simultan zueinander stattfinden. Alle hierin genannten bevorzugten Ausführungsformen für das erfindungsgemäße Verfahren zum digitalen Drucken gelten gleichermaßen für das Verfahren zur Herstellung eines bedruckten Glassubstrats.

Unter dem Begriff *"simultan"* wird in der vorliegenden Erfindung verstanden, dass der Schritt (b) des Erwärmens der Keramik zeitgleich an dem gleichen Glassubstrat durchgeführt wird, an dem auch der Schritt (a) des Aufbringens der Keramikfarbe durchgeführt wird. Das heißt nicht, dass der Schritt (b) ortsgleich zu dem Schritt (a) durchgeführt werden muss, jedoch kann dies auch der Fall sein.

Als Digitaldruckgeräte können beispielsweise Geräte genommen werden, wie sie dem Fachmann in diesem Gebiet aus dem Stand der Technik bekannt sind, mit der Maßgabe, dass diese Geräte mit einem Laser kombiniert werden, der den Schritt (b) des erfindungsgemäßen Verfahrens durchführen kann. Entsprechende Digitaldruckgeräte sind beispielsweise bei der Fa. Longier, Fa. Thieme (www.thieme-products.de) oder Fa. Durst (www.durst-online.com) erhältlich, beispielsweise der Longier Performer FG3750 der Fa. Longier oder die Rho Vetrocer Modelle 160, 250 oder 330 der Fa. Durst.

Unter "*Digitaldruck*" wird eine Gruppe von Druckverfahren verstanden, bei denen das Druckbild direkt von einem Computer in eine Druckmaschine übertragen wird, ohne dass eine statische Druckform benutzt wird.

Das Glassubstrat, auf das die Keramikfarbe aufgebracht wird, ist vorzugsweise ein Substrat, das bei Temperaturen bis zu 2000°C, stärker bevorzugt 1000°C und am stärksten bevorzugt 800°C temperaturstabil ist. Bei dem Glassubstrat können alle denkbaren Gläser verwendet werden können, die eine ausreichend hohe Temperaturstabilität haben. Beispiele hierfür sind Floatglas und Verbundsicherheitsglas.

Die Keramikfarbe ist vorzugsweise eine Farbe, bei der Keramikpigmente suspendiert/dispergiert in einem Lösungsmittel vorliegen. In anderen Worten ist die Keramikfarbe eine Suspension/Dispersion von Keramikpigmenten in einem Lösungsmittel. Bekannt sind solche Keramikfarben als Keramiktinten. Die Keramikfarbe kann auch neben den Keramikpigmenten und dem Lösungsmittel weitere Zusatzstoffe enthalten, wie beispielsweise anorganische Glas-Fritten sowie Dispergier- und Trägerflüssigkeiten. Als Keramikfarbe (auch Keramiktinte genannt) kann erfindungsgemäß beispielsweise anorganische Durst Rho Vetrocer Keramiktinte der Fa. Durst verwendet werden. Es ist jedoch bevorzugt, dass die Keramikfarben, die erfindungsgemäß verwendet werden, keine strahlungshärtenden Zusatzstoffe enthalten, da die Aushärtung nicht mithilfe dieser strahlungshärtenden Zusatzstoffe erfolgen soll, sondern indem die Keramikpigmente aufgeschmolzen und anschließend durch Abkühlung wieder ausgehärtet werden. Besonders bevorzugt sollen die Keramikpigmente sich mit dem Glassubstrat verbinden, indem es während dem Aufschmelzen der Keramikpigmente auch zu einem Aufschmelzen der Substratoberfläche bzw. des Substratmaterials an der Substratoberfläche kommt. Erfindungsgemäß verwendbare Keramikpigmente werden beispielsweise in der EP 0 768 343 A2 beschrieben.

Als Keramikpigmente sind alle Keramikpigmente denkbar, die bei Temperaturen im Bereich von 500°C bis 3200°C, stärker bevorzugt 600°C bis 2700°C und am stärksten bevorzugt 600°C bis 2000°C aufschmelzbar sind, d.h. deren Schmelztemperaturen in den angegebenen Bereichen liegen. Erfindungsgemäß verwendbare Keramikpigmente sind beispielsweise anorganische Silikate, Titanate, Oxide, Carbide oder Nitride, beispielsweise der Metalle Si, Al, Zr, Be, Ba, B oder Ti.

Die mittlere Teilchengröße der Keramikpigmente in der Keramikfarbe liegt vorzugsweise im Bereich von 0,005 mm bis 0,1 mm, stärker bevorzugt im Bereich von 0,005 mm bis 0,05 mm.

In Schritt (b) des erfindungsgemäßen Verfahrens wird die Keramik, beziehungsweise die Keramikpigmente der Keramikfarbe auf Temperaturen im Bereich von 550°C bis 3200°C, stärker bevorzugt 600°C bis 2000°C und am stärksten bevorzugt 600°C bis 1500°C erwärmt.

Nach den Schritten (a) und (b) erlaubt man dem Glassubstrat mit der aufgebrachten Keramikfarbe auf Raumtemperatur abzukühlen, wobei die Keramik aushärtet und eine bedruckte Fläche auf dem Glassubstrat bildet.

In dem erfindungsgemäßen Verfahren ist es bevorzugt, dass das Erwärmen der Keramik der Keramikfarbe mittels eines Laserstrahls durchgeführt wird, der die Keramik der aufgebrachten Keramikfarbe auf dem Glassubstrat in einem Punkt fokussiert erwärmt. In anderen Worten wird der Laser auf einen gewünschten Punkt mit einer bestimmten Temperatur fokussiert, an dem die Keramikpigmente der Keramikfarbe geschmolzen werden sollen.

Das in einem Punkt fokussierte Erwärmen findet vorzugsweise mit einer Zeitdauer im Bereich von 100 fs bis 1 µs, noch stärker bevorzugt im Bereich von 1 ps bis 10 ns statt.

Der Punkt, auf den der Laserstrahl zum Erwärmen der Keramik fokussiert wird, weist vorzugsweise einen Durchmesser im Bereich von 0,1 µm bis 15 mm, stärker bevorzugt 0,05 mm bis 10 mm auf. Weiterhin ist es bevorzugt, dass das Erwärmen der Keramik der Keramikfarbe mittels eines Laserstrahls durch pulsierte Lasereinstrahlung stattfindet. In anderen Worten wird vorzugsweise ein pulsierter Laserstrahl verwendet. Der einzelne Puls der Lasereinstrahlung liegt hier vorzugsweise im Bereich von 0,5 ps bis 10 ns, stärker bevorzugt im Bereich von 1 ps bis 5 ns. Die Pulsfrequenz liegt vorzugsweise im Bereich von 1 Hz bis 1000 Hz. Die Verwendung von pulsierter Lasereinstrahlung hat erfindungsgemäß den Vorteil, dass durch die geringe Zeitdauer des Pulses zwar die relativ kleinen Keramikpigmente auf ihre Schmelztemperatur erwärmt werden können, das Glassubstrat jedoch diesen Temperaturen durch seine größere räumliche Ausdehnung nicht ausgesetzt wird. Durch die kurze Einstrahlungsdauer kann die Energie besser im Glassubstrat verteilt werden, so dass eine Beschädigung des Glassubstrats, beispielsweise durch Rissbildung, verhindert werden kann. Auf diese Weise können mit dem erfindungsgemäßen Verfahren auch Keramikpigmente geschmolzen werden, deren Schmelztemperatur oberhalb der Schmelztemperatur des Glassubstrats liegt.

Erfindungsgemäß wird der Laserstrahl zum Erwärmen der Keramik der Keramikfarbe von der Seite des Glassubstrats eingestrahlt, die der Seite gegenüber liegt, auf der die Keramikfarbe aufgebracht wird, d.h. der Laserstrahl wird durch das Glassubstrat hindurch auf den Punkt fokussiert, an dem sich die zu schmelzende Keramik befindet. Auf diese Weise kann im Gegensatz zur Einstrahlung von der Seite, auf der die Keramikfarbe aufgebracht wird, auch das Glas an der Oberfläche, auf die die Keramikfarbe aufgebracht wird, zum Schmelzen gebracht werden. Damit kann es zu einer homogenen Verbindung der Keramik der Keramikfarbe und der Substratoberfläche kommen. Hier ist es auch vorteilhaft, einen pulsierten Laserstrahl zu verwenden, da auf diese Weise die Einstrahlungsdauer verkürzt werden kann, so dass der Laserstrahl auf dem Weg durch das Glassubstrat dieses nicht - beispielsweise durch Rissbildung - beschädigt.

In einer weiteren Ausführungsform der vorliegenden Erfindung erfolgt der Schritt (b) des erfindungsgemäßen Verfahrens dadurch, dass die Keramikfarbe durch Einstrahlen zweier Laserstrahlen erfolgt, wobei ein erster Laserstrahl die Keramik erwärmt und ein zweiter Laserstrahl die Substratoberfläche aufschmilzt. Hierbei ist es bevorzugt, wenn der erste Laserstrahl von der Seite des Glassubstrats, auf der die Keramik aufgebracht wird, eingestrahlt wird, und ein zweiter Laserstrahl von der Seite des Glassubstrats eingestrahlt wird, die sich der Seite gegenüber befindet, auf der die Keramik aufgebracht wird. Dies hat den Vorteil, dass mit dem ersten Laserstrahl die Keramik in der Keramikfarbe und mit dem zweiten Laserstrahl die Substratoberfläche geschmolzen werden kann. In dieser Ausführungsform ist die Verbindung zwischen Keramik und Glassubstrat besonders homogen. Die Einstrahlung von nur der Seite, auf der die Keramikfarbe aufgebracht wird, reicht oft nicht aus, um auch die Substratoberfläche zu schmelzen, um eine homogene Verbindung zwischen Keramik und Glassubstrat zu gewährleisten. Besonders bevorzugt ist es erfindungsgemäß, dass der erste und der zweite Laserstrahl im Wesentlichen zeitgleich eingestrahlt werden.

Die Keramikpigmente beziehungsweise die Keramik der Keramikfarbe können schon vor dem Auftreffen des Glassubstrats erwärmt werden, d.h. auf dem Weg von dem Druckkopf des Digitaldruckgerätes zu dem Glassubstrat, so dass die Keramikpigmente bereits in geschmolzener Form auf dem Glassubstrat auftreffen.

Weiterhin können die Keramikpigmente jedoch auch erst bis zu ihrem Schmelzpunkt erwärmt werden, wenn sie sich bereits auf dem Glassubstrat befinden.

Mögliche verwendbare Laserquellen sind beispielsweise CO₂-Laser, Nd:YAG-Laser, Excimer-Laser oder ein Diodenlaser. Dabei liegt die Laserleistung vorzugsweise im Bereich von 10 W bis 500 W, stärker bevorzugt im Bereich von 20 W bis 100 W. Die Pulsenergie des Lasers liegt vorzugsweise im Bereich von 10 mJ bis 1000 mJ , stärker bevorzugt im Bereich von 200 mJ bis 600 mJ. Die Wellenlänge des Lasers hängt von der Art des verwendeten Lasers ab und kann bei einem Excimer-Laser bei 193 nm, 248 nm, 308 nm oder 351 nm, bei einem CO₂-Laser bei 10,6 µm oder 9,4 µm, und bei einem Nd:YAG-Laser bei 1064 nm, 946 nm, 1320 nm oder 1444 nm liegen.

Ist es beabsichtigt, eine Aufschmelzung des Glassubstrats zu erzielen, so ist es erfindungsgemäß bevorzugt, im UV-Bereich bzw. im nahen IR-Bereich einzustrahlen, da insbesondere bei der Verwendung von Glas als Substrat eine Absorption in diesen Bereichen stattfinden kann, die zu einer Erwärmung führt. Im UV-Bereich sind Wellenlängen im Bereich von 150 nm bis 355 nm und im nahen IR-Bereich Wellenlängen von 5 µm bis 11 µm erfindungsgemäß bevorzugt.

Das erfindungsgemäße Verfahren ermöglicht weiterhin aufgrund einer schnellen Energiemodulation durch Temperatureinflüsse die Variation der Farbzusammensetzung beziehungsweise der Farbwerte gemäß der sogenannten RAL-Farbtabelle.

Weiterhin kann in einem Digitaldrucksystem für Keramikfarben die Strahlungsquelle beziehungsweise der Laser für das Erwärmen der Keramikfarbe im Druckkopf integriert sein. Dabei können die zur Herstellung von Farben nach der RAL-Tabelle erforderlichen Keramikpigmente beziehungsweise Keramikfarben in einem Tanksystem bereitgestellt werden. Dabei wird vorzugsweise eine geeignete Steuerungselektronik zur "intelligenten" Farbmischung im Farbmanagementsystem verwendet.

Ein weiterer Gegenstand der vorliegenden Erfindung ist die Verwendung eines Laserstrahls beziehungsweise eines Lasers in einer Vorrichtung zum digitalen Drucken einer Keramikfarbe auf einem Glassubstrat, wobei der Laserstrahl die Keramik der Keramikfarbe auf mindestens den Schmelzpunkt der Keramik simultan zu dem Aufbringen der Keramikfarbe auf ein Glassubstrat mittels eines Druckkopfes zur Vorrichtung erwärmt, wobei der Laserstrahl zum Erwärmen der Keramik der Keramikfarbe von der Seite des Glassubstrats eingestrahlt wird, die der Seite gegenüber liegt, auf der die Keramikfarbe aufgebracht wird.

Ein noch weiterer Gegenstand der vorliegenden Erfindung betrifft eine Vorrichtung zum digitalen Drucken einer Keramikfarbe auf einem Glassubstrat, die einen Druckkopf zum Aufbringen einer Keramikfarbe auf ein Glassubstrat sowie einen Laser zum Erwärmen der Keramik der Keramikfarbe auf mindestens den Schmelzpunkt der Keramik mittels eines Laserstrahls umfasst, wobei Druckkopf und Laser derart angeordnet sind, dass der Laserstrahl von der Seite des Glassubstrats einstrahlbar ist, die der Seite gegenüber liegt, auf der die Keramikfarbe aufbringbar ist. In einer bevorzugten Variante der erfindungsgemäßen Vorrichtung weist diese einen ersten und einen zweiten Laser auf, die - wie weiter oben beschrieben - zur Einstrahlung des ersten und des zweiten Laserstrahls dienen können.

Alle für das erfindungsgemäße Verfahren bevorzugten Merkmale betreffen auch die erfindungsgemäße Verwendung beziehungsweise die erfindungsgemäße Vorrichtung.

Das erfindungsgemäße Verfahren, die erfindungsgemäße Verwendung und die erfindungsgemäße Vorrichtung zum digitalen Drucken einer Keramikfarbe auf einem Glassubstrat bringen die folgenden Vorteile mit sich:
- Das simultane Aufschmelzen der Keramikpigmente der Keramikfarbe während des Druckvorgangs ermöglicht die Fertigstellung eines gedruckten Objekts mit Keramikfarben in viel geringerer Zeit, als wenn entsprechend bedruckte Glassubstrate zur Aufschmelzung und Aushärtung der Keramikfarben in einem Vorspannofen behandelt werden müssen.
- Die Verwendung eines Lasers zum Erwärmen beziehungsweise Aufschmelzen der Keramikpigmente der Keramikfarbe in einem fokussierten Punkt ermöglicht es, auch Keramikfarben zu verwenden, die eine höhere Schmelztemperatur als das Glassubstrat besitzen. Entsprechende Keramikfarben können aufgrund der Temperaturbehandlung in einem Vorspannofen bisher nicht in Druckverfahren verwendet werden.
- Durch die Möglichkeit der breiteren Verwendung von Keramikpigmenten ist es möglich, ein intelligentes Farbsystem bereitzustellen, das alle Farbtöne der RAL-Farbtabelle ermöglicht.
- Gegenüber der Ink-Jet-Technologie (mit organischer Farbe und UV-Härtung) besitzt Keramikfarbe eine weitaus höhere Festigkeit, so dass der Digitaldruck von Keramikfarben einen sehr hohen Industriestandard erfüllt.

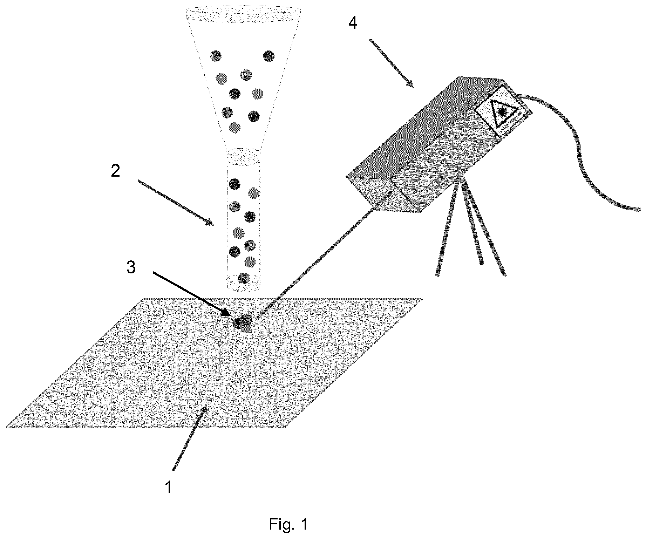

Die vorliegende Erfindung soll nun schematisch anhand der Fig. 1 bis 6 veranschaulicht werden. Sofern technisch realisierbar, können alle mit den einzelnen Ausführungsformen in den Fig. 1 bis 6 genannten bevorzugten Merkmale auch jeweils in den jeweils anderen Ausführungsformen verwendet werden, so dass die Nennung von bevorzugten Ausführungsformen in Verbindung mit einer bestimmten Figur keine Einschränkung auf die darin gezeigte Ausführungsform darstellt, sondern auch auf die in den anderen Figuren gezeigten Ausführungsformen übertragen werden kann.
- Fig. 1:: Fig. 1 zeigt schematisch ein Verfahren mit Erwärmung von Keramikpigmenten mittels eines Laserstrahls.
- Fig. 2:: Fig. 2 zeigt ein Verfahren, wobei das Aufschmelzen der Keramikpigmente der Keramikfarbe zeitgleich, aber nicht ortsgleich auf dem gleichen Substrat durchgeführt wird.
- Fig. 3:: Fig. 3 zeigt ein erfindungsgemäßes Verfahren, worin der Laserstrahl von der dem Druckkopf gegenüberliegenden Seite des Glassubstrats auf die Keramikpigmente der Keramikfarbe fokussiert wird.
- Fig. 4:: Fig. 4 zeigt ein Verfahren, bei dem die Einstrahlung des Lasers zeitund ortsgleich zu dem Aufbringen der Keramikpigmente auf dem Substrat erfolgt.
- Fig. 5:: Die Fig. 5 zeigt ein Verfahren, bei dem der Laser in dem Druckkopf integriert ist.
- Fig. 6:: Die Fig. 6 zeigt ein erfindungsgemäßes Verfahren, bei dem mit zwei verschiedenen Lasern eingestrahlt wird.
- Fig. 7:: Die Fig. 7 zeigt ein Verfahren nach dem Stand der Technik, bei dem das Aushärten der Keramikfarbe in einem getrennten Vorspannofen stattfindet.

In Fig. 1 wird schematisch gezeigt, wie auf ein Substrat 1 Keramikpigmente 3 einer Keramikfarbe 2 aufgebracht werden, die simultan mit einem Laserstrahl eines Lasers 4 behandelt werden, so dass die Pigmente schmelzen und durch anschließendes Wiederabkühlen ausgehärtet werden können.

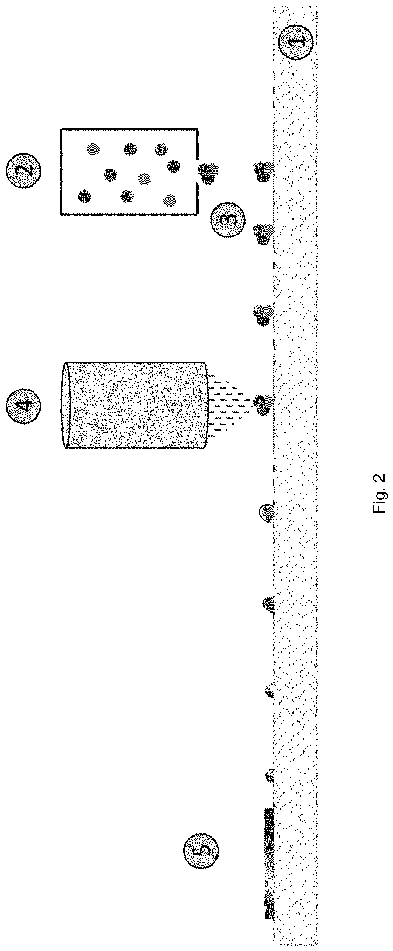

In Fig. 2 ist schematisch ein Verfahren gezeigt, bei dem auf ein Substrat 1 Keramikpigmente 3 einer Keramikfarbe 2 an einem bestimmten Ort auf das Substrat 1 aufgebracht werden. Das Erwärmen der aufgebrachten Keramikpigmente 3 erfolgt auf dem gleichen Substrat 1 zwar zeitgleich durch den Laserstrahl eines Lasers 4, jedoch nicht an der gleichen Stelle an der die Keramikfarbe 2 auf das Substrat 1 aufgebracht wird. Nach dem Abkühlen der auf Schmelztemperatur gebrachten Keramikpigmente kann eine bedruckte Fläche 5 auf dem Glassubstrat 1 entstehen.

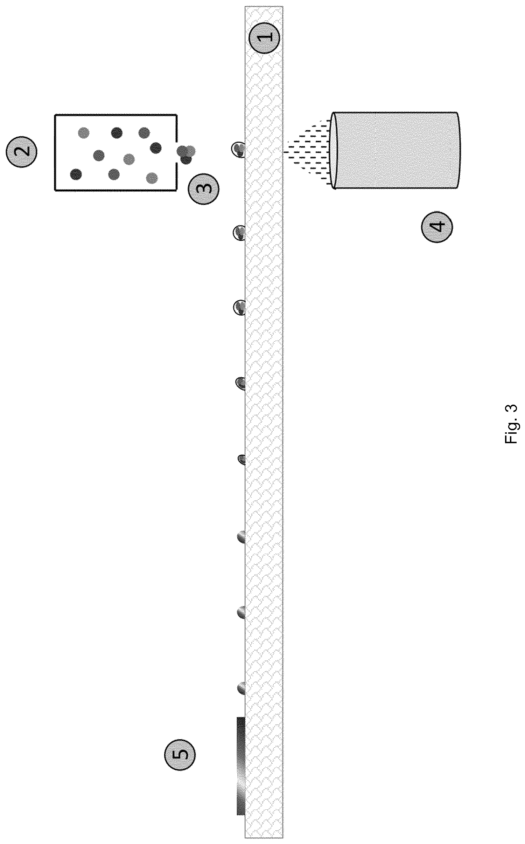

Fig. 3 zeigt ein erfindungsgemäßes Verfahren, bei dem auf ein Glassubstrat 1 von einer Seite Keramikpigmente 3 einer Keramikfarbe 2 aufgebracht werden. Von der anderen Seite des Glassubstrats 1 erfolgt die Einstrahlung eines Laserstrahls durch einen dort angebrachten Laser 4. Dabei wird der Laserstrahl so fokussiert, dass sein Brennpunkt nicht in dem Glassubstrat 1 ist, sondern erst an der Stelle, an der die Keramikpigmente 3 der Keramikfarbe 2 geschmolzen werden sollen. Wiederum durch Abkühlen der Keramikpigmente entsteht hier eine bedruckte Fläche 5 auf dem Glassubstrat 1.

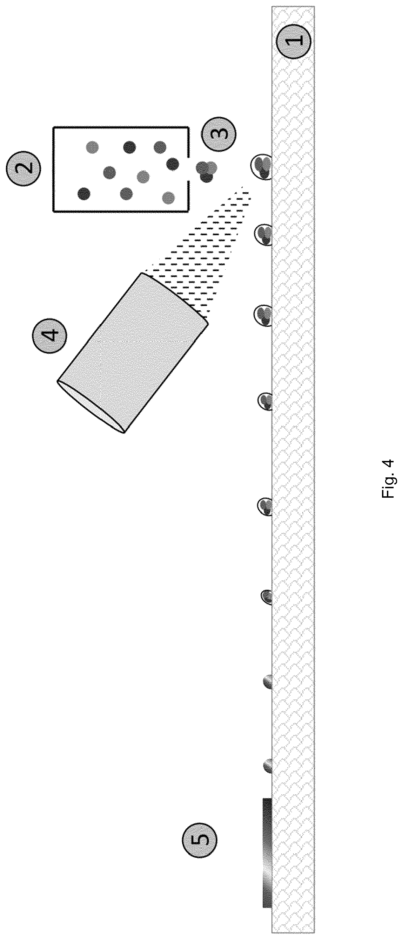

Fig. 4 zeigt ein Verfahren, bei dem auf einem Substrat 1 Keramikpigmente 3 einer Keramikfarbe 2 aufgebracht werden, die direkt an der Stelle, an der sie auf dem Druckkopf aufgebracht werden, durch den Laserstrahl eines Lasers 4 geschmolzen werden. Durch Abkühlen der Keramikpigmente 3 auf dem Substrat 1 entsteht eine bedruckte Fläche 5.

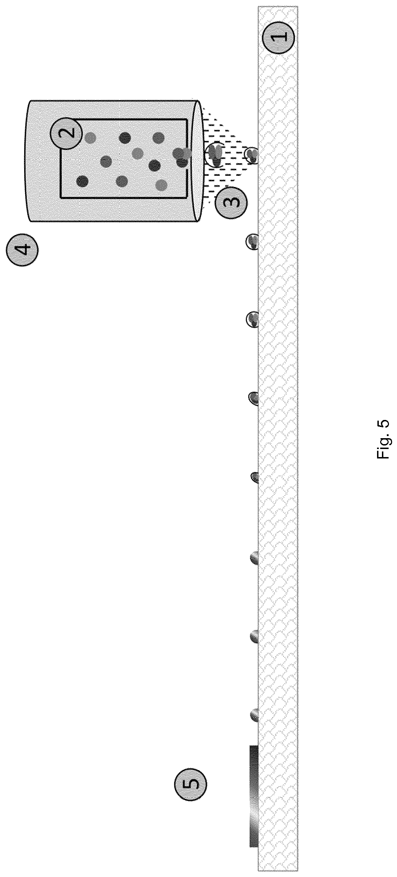

Fig. 5 zeigt schematisch ein Verfahren, bei dem der Laser 4 in dem Druckkopf des Digitaldruckgerätes integriert ist, so dass die Keramikpigmente 3 der Keramikfarbe 2 während dem Auftragen auf das Substrat 1 auf ihre Schmelztemperatur erwärmt werden. Wiederum durch Abkühlen der Keramikpigmente 3 entsteht eine bedruckte Fläche 5 auf dem Substrat 1.

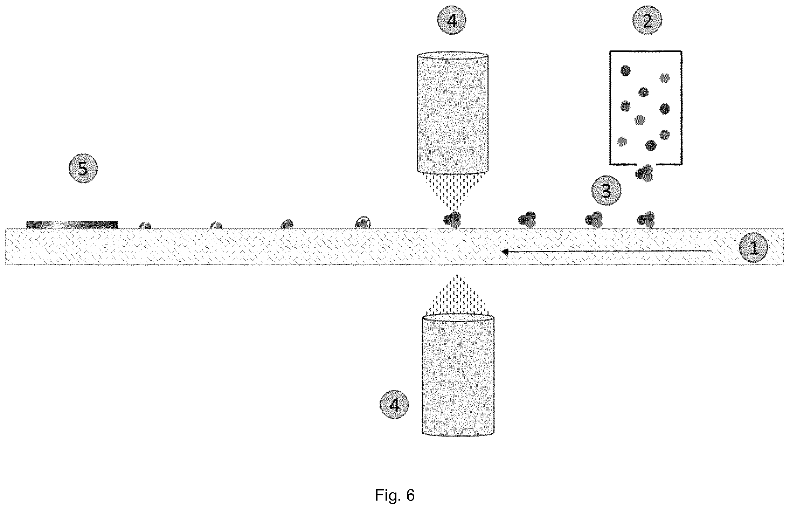

Fig. 6 zeigt schematisch ein erfindungsgemäßes Verfahren, bei dem mit zwei verschiedenen Lasern 4 eingestrahlt wird. Der erste Laser 4 wird vorzugsweise dafür verwendet, die Keramik 3 in der Keramikfarbe 2 zu schmelzen. Dieser Laser befindet sich vorzugsweise auf der Seite, von der auch die Keramikfarbe 2 auf das Glassubstrat 1 aufgebracht wird. Der zweite Laser 4 wird vorzugsweise dafür verwendet, das Glassubstrat 1 an der Oberfläche aufzuschmelzen, an der die Keramikfarbe 2 aufgebracht wird. Der zuletzt genannte Laser 4 strahlt vorzugsweise von der Seite ein, die der Seite gegenüberliegt, von der die Keramikfarbe 2 aufgebracht wird.

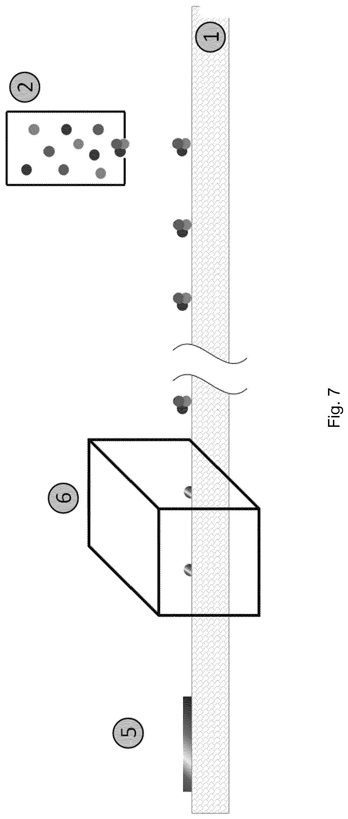

Im Vergleich zu dem erfindungsgemäßen Verfahren ist in Fig. 7 ein Verfahren nach dem Stand der Technik dargestellt, bei dem ein Substrat 1 zunächst mit Keramikpigmenten 3 bedruckt wird und erst nach dem Druckvorgang das Aufschmelzen und Aushärten der Keramikpigmente 3 in einem Vorspannofen 6 erfolgt. Erst nach dem Herausnehmen des bedruckten Substrats 1 aus dem Vorspannofen 6 erlaubt das Abkühlen der geschmolzenen Keramikpigmente die Bildung einer bedruckten Fläche 5.

### Bezugszeichenliste:

- 1: (Glas)-Substrat
- 2: Keramikfarbe
- 3: Keramikpigmente/Keramik
- 4: Laser
- 5: Bedruckte Fläche
- 6: Vorspannofen

## Patentansprüche

1. Verfahren zum digitalen Drucken einer Keramikfarbe (2) auf einem Glassubstrat (1), das die folgenden Schritte umfasst:
(a) Aufbringen einer Keramikfarbe (2) auf ein Glassubstrat (1) mittels eines Druckkopfes eines Digitaldruckgerätes; und
(b) Erwärmen der Keramik (3) der Keramikfarbe (2) auf mindestens den Schmelzpunkt der Keramik (3) mittels eines Laserstrahls eines Lasers (4),
wobei der Schritt (b) simultan zu dem Schritt (a) stattfindet,
**dadurch gekennzeichnet, dass**
der Laserstrahl zum Erwärmen der Keramik der Keramikfarbe von der Seite des Glassubstrats eingestrahlt wird, die der Seite gegenüber liegt, auf der die Keramikfarbe aufgebracht wird.

2. Verfahren nach Anspruch 1, wobei die Keramikfarbe (2) Keramikpigmente (3) enthält.

3. Verfahren nach Anspruch 1 oder 2, worin in Schritt (b) die Keramik der Keramikfarbe (2) auf Temperaturen im Bereich von 600 °C bis 3200 °C erwärmt wird.

4. Verfahren nach einem der Ansprüche 1 bis 3, worin das Erwärmen der Keramik der Keramikfarbe (2) mittels eines Laserstrahls durchgeführt wird, der die Keramik der aufgebrachten Keramikfarbe (2) auf dem Glassubstrat (1) in einem Punkt fokussiert erwärmt.

5. Verfahren nach Anspruch 4, worin das in einem Punkt fokussierte Erwärmen mit einer Zeitdauer im Bereich von 100 fs bis 1 µs stattfindet.

6. Verfahren nach Anspruch 4 oder 5, worin der Punkt einen Durchmesser im Bereich von 0,1 µm bis 15 mm aufweist.

7. Verfahren nach einem der Ansprüche 1 bis 5, worin das Erwärmen der Keramik der Keramikfarbe (2) mittels eines Laserstrahls durch pulsierte Lasereinstrahlung stattfindet.

8. Verfahren nach Anspruch 7, worin der Puls der Lasereinstrahlung im Bereich von 0,5 ps bis 10 ns liegt.

9. Verfahren nach einem der Ansprüche 1 bis 8, worin mit einem ersten Laserstrahl das Erwärmen der Keramik und mit einem zweiten Laserstrahl ein Aufschmelzen der Oberfläche des Glassubstrats erfolgt.

10. Verfahren nach Anspruch 9, worin der erste Laserstrahl von der gleichen Seite des Glassubstrats (1) einstrahlt, auf der die Keramikfarbe (2) aufgebracht wird, und der zweite Laserstrahl von der Seite des Glassubstrats (1) einstrahlt, die der Seite gegenüberliegt, auf der die Keramikfarbe (2) aufgebracht wird.

11. Verfahren nach einem der Ansprüche 1 bis 10, worin der Schritt (b) simultan zu dem Schritt (a) an der gleichen oder einer anderen Stelle des Glassubstrats (1) durchgeführt wird.

12. Verwendung eines Laserstrahls in einer Vorrichtung zum digitalen Drucken einer Keramikfarbe (2) auf einem Glassubstrat (1), wobei der Laserstrahl eines Lasers (4) die Keramik (3) der Keramikfarbe (2) auf mindestens den Schmelzpunkt der Keramik simultan zu dem Aufbringen der Keramikfarbe auf ein Glassubstrat mittels eines Druckkopfes der Vorrichtung erwärmt, **dadurch gekennzeichnet, dass** der Laserstrahl zum Erwärmen der Keramik der Keramikfarbe von der Seite des Glassubstrats eingestrahlt wird, die der Seite gegenüber liegt, auf der die Keramikfarbe aufgebracht wird.

13. Vorrichtung zum digitalen Drucken einer Keramikfarbe (2) auf einem Glassubstrat (1), die einen Druckkopf zum Aufbringen einer Keramikfarbe (2) auf ein Glassubstrat (1) sowie einen Laser (4) zum Erwärmen der Keramik der Keramikfarbe auf mindestens den Schmelzpunkt der Keramik mittels eines Laserstrahls umfasst, **dadurch gekennzeichnet, dass** Druckkopf und Laser derart angeordnet sind, dass der Laserstrahl von der Seite des Glassubstrats einstrahlbar ist, die der Seite gegenüber liegt, auf der die Keramikfarbe aufbringbar ist.

## Claims

1. Method for digitally printing a ceramic ink (2) on a glass substrate (1), which comprises the following steps:
(a) applying a ceramic ink (2) to a glass substrate (1) by means of a printhead of a digital printer; and
(b) heating the ceramic (3) of the ceramic ink (2) to at least the melting point of the ceramic (3) by means of a laser beam of a laser (4),
wherein step (b) takes place at the same time as step (a),
**characterized in that**
the laser beam for heating the ceramic of the ceramic ink is radiated in from the side of the glass substrate which lies opposite the side to which the ceramic ink is applied.

2. Method according to claim 1, wherein the ceramic ink (2) contains ceramic pigments (3).

3. Method according to claim 1 or 2, in which in step (b) the ceramic of the ceramic ink (2) is heated to temperatures in the range of from 600°C to 3200°C.

4. Method according to one of claims 1 to 3, in which the heating of the ceramic of the ceramic ink (2) is carried out by means of a laser beam which heats the ceramic of the applied ceramic ink (2) focussed in a point on the glass substrate (1).

5. Method according to claim 4, in which the heating focussed in a point takes place for a duration in the range of from 100 fs to 1 µs.

6. Method according to claim 4 or 5, in which the point has a diameter in the range of from 0.1 µm to 15 mm.

7. Method according to one of claims 1 to 5, in which the heating of the ceramic of the ceramic ink (2) takes place using pulsed laser radiation by means of a laser beam.

8. Method according to claim 7, in which the pulse of the laser radiation lies in the range of from 0.5 ps to 10 ns.

9. Method according to one of claims 1 to 8, in which the heating of the ceramic is effected with a first laser beam and a melting of the surface of the glass substrate is effected with a second laser beam.

10. Method according to claim 9, in which the first laser beam radiates in from the same side of the glass substrate (1) to which the ceramic ink (2) is applied, and the second laser beam radiates in from the side of the glass substrate (1) which lies opposite the side to which the ceramic ink (2) is applied.

11. Method according to one of claims 1 to 10, in which step (b) is carried out at the same time as step (a) in the same or in a different place on the glass substrate (1).

12. Use of a laser beam in a device for digitally printing a ceramic ink (2) on a glass substrate (1), wherein the laser beam of a laser (4) heats the ceramic (3) of the ceramic ink (2) to at least the melting point of the ceramic at the same time as the application of the ceramic ink to a glass substrate by means of a printhead of the device, **characterized in that** the laser beam for heating the ceramic of the ceramic ink is radiated in from the side of the glass substrate which lies opposite the side to which the ceramic ink is applied.

13. Device for digitally printing a ceramic ink (2) on a glass substrate (1), which comprises a printhead for applying a ceramic ink (2) to a glass substrate (1) as well as a laser (4) for heating the ceramic of the ceramic ink to at least the melting point of the ceramic by means of a laser beam, **characterized in that** printhead and laser are arranged such that the laser beam can be radiated in from the side of the glass substrate which lies opposite the side to which the ceramic ink can be applied.

## Revendications

1. Procédé d'impression numérique d'une peinture céramique (2) sur un substrat en verre (1), qui comprend les étapes suivantes :
(a) application d'une peinture céramique (2) sur le substrat en verre (1) au moyen d'une tête d'impression d'une imprimante numérique ; et
(b) chauffage de la céramique (3) de la peinture céramique (2) au moins jusqu'au point de fusion de la céramique (3) au moyen d'un faisceau laser d'un laser (4),
l'étape (b) ayant lieu de manière simultanée avec l'étape (a),
**caractérisé en ce que**
le faisceau laser pour le chauffage de la céramique de la peinture céramique est envoyé sur le côté du substrat en verre opposé au côté sur lequel est appliquée la peinture céramique.

2. Procédé selon la revendication 1, dans lequel la peinture céramique (2) contient des pigments céramiques (3).

3. Procédé selon la revendication 1 ou 2, dans lequel, à l'étape (b), la céramique de la peinture céramique (2) est chauffée à des températures de l'ordre de 600 °C à 3 200 °C.

4. Procédé selon l'une des revendications 1 à 3, dans lequel le chauffage de la céramique de la peinture céramique (2) est effectué au moyen d'un faisceau laser qui chauffe la céramique de la peinture céramique (2) appliquée sur le substrat de verre (1) de manière focalisée sur un point.

5. Procédé selon la revendication 4, dans lequel le chauffage focalisé sur un point a lieu avec une durée de l'ordre de 100 fs et 1 µs.

6. Procédé selon la revendication 4 ou 5, dans lequel le point présente un diamètre de l'ordre de 0,1 µm à 15 mm.

7. Procédé selon l'une des revendications 1 à 5, dans lequel le chauffage de la céramique de la peinture céramique (2) a lieu au moyen d'un faisceau laser par le biais d'un rayonnement laser impulsionnel.

8. Procédé selon la revendication 7, dans lequel l'impulsion du rayonnement laser est de l'ordre de 0,5 ps à 10 ns.

9. Procédé selon l'une des revendications 1 à 8, dans lequel le chauffage de la céramique a lieu avec un premier faisceau laser et une fusion de la surface du substrat de verre a lieu avec un deuxième faisceau laser.

10. Procédé selon la revendication 9, dans lequel le premier faisceau laser est envoyé sur le côté du substrat de verre (1) sur lequel est appliquée la peinture céramique (2) et le deuxième faisceau laser est envoyé sur le côté du substrat de verre (1) opposé au côté sur lequel est appliquée la peinture céramique (2).

11. Procédé selon l'une des revendications 1 à 10, dans lequel l'étape (b) est effectuée de manière simultanée avec l'étape (a) au même endroit ou sur un autre endroit du substrat de verre (1).

12. Utilisation d'un faisceau laser dans un dispositif d'impression numérique d'une peinture céramique (2) sur un substrat de verre (1), le faisceau laser d'un laser (4) chauffant la céramique (3) de la peinture céramique (2) au moins jusqu'au point de fusion de la céramique simultanément à l'application de la peinture céramique sur un substrat de verre au moyen d'une tête d'impression du dispositif, **caractérisé en ce que** le faisceau laser pour le chauffage de la céramique de la peinture céramique est envoyé sur le côté du substrat de verre opposé au côté sur lequel est appliquée la peinture céramique.

13. Dispositif d'impression numérique d'une peinture céramique (2) sur un substrat de verre (1), qui comprend une tête d'impression pour l'application d'une peinture céramique (2) sur un substrat de verre (1) ainsi qu'un laser (4) pour le chauffage de la céramique de la peinture céramique au moins jusqu'au point de fusion de la céramique au moyen d'un faisceau laser,
**caractérisé en ce que**
la tête d'impression et le laser sont disposés de façon à ce que le faisceau laser puisse être envoyé sur le côté du substrat de verre opposé au côté sur lequel est appliquée la peinture céramique.
